# EUROPÄISCHE PATENTSCHRIFT

(11) **EP 3 468 839 B1**
(45) Veröffentlichungstag und Bekanntmachung des Hinweises auf die Patenterteilung: **03.11.2021**
(21) Anmeldenummer: 17730352.6
(22) Anmeldetag: 22.05.2017
(51) Int. Cl.: F21S 41/675, F21S 41/64, B60Q 1/08

(54) **FAHRZEUGSCHEINWERFER**
VEHICLE HEADLIGHT
PROJECTEUR DE VÉHICULE

(30) Priorität: 13.06.2016 AT 505322016
(43) Veröffentlichungstag der Anmeldung: 17.04.2019
(73) Patentinhaber: ZKW Group GmbH, 3250 Wieselburg (AT)
(72) Erfinder: LAHMER, Martin, 3663 Münichreith-Laimbach (AT)
(74) Vertreter: Patentanwaltskanzlei Matschnig & Forsthuber OG
(86) Internationale Anmeldenummer: PCT/AT2017/060135
(87) Internationale Veröffentlichungsnummer: WO 2017/214649

(56) Entgegenhaltungen:
- EP-A1- 2 479 064
- EP-A2- 1 316 474
- WO-A2-2015/032795
- US-A1- 2004 114 379
- US-A1- 2011 205 223
- US-A1- 2015 048 736

## Beschreibung

Die Erfindung betrifft einen Fahrzeugscheinwerfer, umfassend zumindest eine Lichtquelle, zumindest eine Projektionsoptik, zumindest eine Steuereinrichtung, zumindest eine Ausgabeeinheit sowie zumindest ein optoelektronisches Bauteil, das eine steuerbare Anordnung von mehreren, individuell verstellbaren optoelektronischen Elementen in Form einer zweidimensionalen Matrix umfasst, wobei eine Bildauflösung durch das Produkt aus der Anzahl von Zeilen und Spalten der Matrix definiert ist, und der Fahrzeugscheinwerfer dazu eingerichtet ist, Licht von der zumindest einen Lichtquelle in Richtung des zumindest einen optoelektronischen Bauteils abzustrahlen und mittels dem zumindest einen optoelektronischen Bauteil zu modulieren und zumindest teilweise in Richtung der zumindest einen Projektionsoptik zu strahlen und vor dem Fahrzeug ein Lichtbild auszubilden, wobei die zumindest eine Steuereinrichtung mit der zumindest einen Ausgabeeinheit verbunden ist, und die zumindest eine Ausgabeeinheit mit dem zumindest einen optoelektronischen Bauteil verbunden ist und die optoelektronische Elemente ansteuern kann.

Ferner betrifft die Erfindung ein Verfahren zur Erzeugung einer Lichtverteilung vor einem Fahrzeug durch einem Fahrzeugscheinwerfer der vorher genannten Art.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell wird das Lichtbild anhand einer Projektion auf eine vertikale Fläche entsprechend der einschlägigen Normen, die sich auf die KFZ-Beleuchtungstechnik beziehen, beschrieben.

Um diesem genannten Bedürfnis zu entsprechen, wurden unter anderem Scheinwerfer entwickelt, in denen eine variabel ansteuerbare Reflektorfläche aus einer Mehrzahl von Mikrospiegeln gebildet ist und eine Lichtemission, die von einer Lichtquelle erzeugt wird, in Abstrahlrichtung des Scheinwerfers reflektiert. Derartige Leuchteinrichtungen sind im Fahrzeugbau wegen ihrer sehr flexiblen Lichtfunktionen vorteilhaft, da für unterschiedliche Leuchtbereiche die Beleuchtungsstärke individuell geregelt werden kann und beliebige Lichtfunktionen mit unterschiedlichen Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung oder die Abbildung von blendfreiem Fernlicht.

Für die Mikrospiegelanordnung kommt die sogenannte Digital Light Processing (DLP®) Projektionstechnik zur Anwendung, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert.

Basis für diese Technik bildet ein elektronisches Bauteil, das die rechteckige Anordnung in Form einer Matrix von Spiegeln und deren Ansteuerungstechnik enthält und als "Digital Micromirror Device" (DMD) bezeichnet wird. Solche Fahrzeugscheinwerfer sind aus der WO 2015/032795 A1 oder der US 2004/114379 A1 bekannt.

Bei einem DMD-Mikrosystem handelt es sich um einen Flächenlichtmodulator (Spatial Light Modulator, SLM), der aus matrixförmig angeordneten Mikrospiegelaktoren, das heißt verkippbaren spiegelnden Flächen besteht, beispielsweise mit einer Kantenlänge von etwa 16 µm. Die Spiegelflächen sind derart konstruiert, dass sie durch die Einwirkung elektrostatischer Felder beweglich sind. Jeder Mikrospiegel ist im Winkel einzeln verstellbar und weist in der Regel zwei stabile Endzustände auf, zwischen denen innerhalb einer Sekunde bis zu 5000 mal gewechselt werden kann. Die einzelnen Mikrospiegel können beispielsweise jeweils durch eine Pulsweiten-Modulation (PWM) angesteuert werden, um in der Hauptstrahlrichtung der DMD-Anordnung weitere Zustände der Mikrospiegel abzubilden, deren zeitlich gemittelte Reflektivität zwischen den beiden stabilen Zuständen des DMD liegt. Die Anzahl der Spiegel entspricht der Auflösung des projizierten Bilds, wobei ein Spiegel ein oder mehrere Pixel darstellen kann. Mittlerweile sind DMD-Chips mit hohen Auflösungen im Megapixel-Bereich erhältlich. Den verstellbaren Einzelspiegeln zugrunde liegende Technologie ist die Micro-Electro-Mechanical-Systems-(MEMS) Technologie.

Während die DMD-Technologie zwei stabile Spiegel-Zustände aufweist, und durch Modulation zwischen beiden stabilen Zuständen der Reflexionsfaktor eingestellt werden kann, weist die "Analog Micromirror Device" (AMD) Technologie die Eigenschaft auf, dass die Einzelspiegel in variablen Spiegelpositionen eingestellt werden können, die dort jeweils in einem stabilen Zustand sind

Bei derartigen Fahrzeugscheinwerfen, die mehrere verschiedene hochauflösende Lichtverteilungen auf die Fahrbahn vor dem Fahrzeug projizieren können, kommt es zu einem signifikanten Speicherbedarf. Steuereinrichtungen für Mikrospiegelanordnungen werden oft als "embedded system" realisiert. Oft werden derartige eingebettete Systeme speziell an eine Aufgabe angepasst und aus Kostengründen eine optimierte, gemischte Hardware-Software-Implementierung gewählt. Deshalb ist in der Praxis häufig die Rechenleistung sowie der verfügbare Speicher beschränkt. Es ist häufig ungünstig einen zusätzlichen externen Speicher zu verwenden, da nicht nur der Speicher selbst Kosten verursacht, sondern auch die Komplexität des "embedded system" signifikant erhöht wird, beziehungsweise in der für automobile Anwendungen benötigten Zertifizierung nicht am Markt verfügbar ist.

Es ist Aufgabe der Erfindung, die genannten Nachteile zu überwinden.

Die Aufgabe wird durch einen Scheinwerfer der eingangs genannten Art dadurch gelöst, dass gemäß der Erfindung in der zumindest einen Steuereinrichtung zumindest ein Lichtmodell in Form einer Vielzahl von Stützstellen abgespeichert ist, und die zumindest eine Steuereinrichtung eingerichtet ist, aus dem zumindest einen Lichtmodell Bilddaten in Form einer zweidimensionalen, matrixförmigen Situationslichtverteilung mit einer Situationsbildauflösung, die durch das Produkt aus der Anzahl von Zeilen und Spalten der Situationslichtverteilung definiert ist, zu bilden, wobei die Situationsbildauflösung wesentlich höher, bevorzugt zumindest hundertmal, besonders bevorzugt zumindest zehntausendmal so hoch ist als die Vielzahl der Stützstellen des Lichtmodells und die Bilddaten vorzugsweise durch Interpolation aus den Stützstellen gebildet werden und die Bilddaten mittels der zumindest einen Ausgabeeinheit auf das zumindest eine optoelektronische Bauteil abgebildet werden können.

Durch die Verwendung eines Lichtmodells in Form einer Vielzahl von Stützstellen kann der benötigte Speicherbedarf zur Speicherung von einem oder mehreren Lichtverteilungen signifikant reduziert werden. Lichtverteilungen können einfach verlaufende Helligkeitsverläufe aufweisen, die mittels zweidimensional gekrümmter Flächen sehr einfach beschrieben werden können. Diese Flächen wiederum können durch eine Vielzahl von Stützstellen beschrieben werden, deren Anzahl und folglich deren Speicherbedarf deutlich geringer ist, als der jener Lichtverteilung, die über Bilddaten in hoher Auflösung beschrieben ist. Dadurch ergibt sich ein drastisch reduzierter Speicherbedarf, der beispielsweise durch ein konventionelles "embedded system" als Steuereinrichtung bedient werden kann. Es ist klar, dass der benötigte Speicher sowohl auf einem Mikroprozessor-Chip als auch auf einem gesonderten Speicher-Chip gelegen sein kann.

Die Stützstellen können beispielsweise in Form einer zweidimensionalen Matrix definiert sein. Wird die Anzahl der Stützstellen zumindest um einen Faktor Zehn jeweils bezüglich der Zeilen und Spalten der Matrix geringer als die Anzahl an Zeilen und Spalten der Situationslichtverteilung gewählt, so ergibt sich eine Reduktion des benötigten Speicherbedarfs zumindest um den Faktor Hundert. Wird die Anzahl der Stützstellen zumindest um den Faktor Hundert geringer als die Anzahl an Zeilen und Spalten der Situationslichtverteilung gewählt, so ergibt sich eine Reduktion des benötigten Speicherbedarfs zumindest um den Faktor Zehntausend.

Ferner wird die Aufgabe durch ein Verfahren der eingangs genannten Art dadurch gelöst, dass gemäß der Erfindung ein Schweinwerfer wie oben beschrieben eine Lichtverteilung der genannten Art erzeugt. Die aus dem Verfahren resultierenden Vorteile entsprechen jenen des erfindungsgemäßen Fahrzeugscheinwerfers, sodass im Weiteren nur die Vorteile des Fahrzeugscheinwerfers ausgeführt sind und die erzielten Vorteile entsprechend auch für das erfindungsgemäße Verfahren gelten.

Um aus Stützstellen die benötigten Bilddaten in hoher Auflösung zu berechnen, ist es günstig, wenn die Interpolation von Werten zwischen Stützstellen linear erfolgt, da die Berechnung dann besonders einfach ausgeführt werden kann und beispielsweise durch ein handelsübliches, kostengünstiges "embedded system" erfolgen kann. Es ist klar, dass die Berechnung der Bilddaten beispielsweise von einem oder mehreren Prozessoren oder Recheneinheiten durchgeführt werden kann. Die Berechnung kann mit anderen Worten auf einem einzelnen Mikroprozessor oder auch auf einer als verteilte Systemarchitektur organisierte, logischen Recheneinheit ausgeführt werden.

Werden in speziellen Anwendungen besonders gleichmäßig verlaufende Lichtverteilungen gewünscht oder ist die Ausbildung beispielsweise einer scharfen Hell-Dunkel-Grenze eines Abblendlichts erforderlich, so können auch andere Interpolationsverfahren, wie beispielsweise, Polynomzüge (Splines) oder auch stückweise Interpolationen angewendet werden. Ebenso sind einfachere Interpolationsverfahren denkbar, wie beispielsweise ein konstanter Verlauf ausgehend von einer Stützstelle bis unmittelbar vor die nächste Stützstelle.

Es ist sehr vorteilhaft, wenn die Stützstellen durch Reflexionswerte oder Transmissionswerte der optoelektronischen Elemente definiert sind. Dadurch können die Bilddaten direkt zur Ansteuerung der Ausgabeeinheit verwendet werden, ohne dass eine Umrechnung oder Anpassung beispielsweise von absoluten oder auch relativen Helligkeitswerten erfolgen muss und Rechenzeit eingespart werden kann.

Die Berechnungsverfahren innerhalb der Steuereinheit können einfach gehalten werden, wenn die Abstände zwischen Stützstellen gleich groß sind, da der jeweilige Abstand der berechneten Punkte für Bilddaten in hoher Auflösung zwischen den Stützstellen nur ein einziges Mal berechnet werden muss. Mit anderen Worten werden die Stützstellen durch eine einfache lineare Bildtransformation auf die Bildauflösung des optoelektronischen Bauteils in Form einer einmaligen Berechnung (beispielsweise eine lineare Interpolation) transformiert werden, indem nur für eine Stützstelle die Schrittweiten in Zeilen- und Spaltenrichtung bestimmt werden, die dann für alle anderen Stützstellen auch gelten. Dadurch kann sowohl Rechenzeit als auch Programmieraufwand gering gehalten werden. Es ist besonders vorteilhaft, wenn die Situationslichtverteilung eine Lichtverteilung eines Abblendlichtes oder Fernlichtes ist, da die Lichtverteilungen durch einschlägige Normen vorab definiert sind und gegebenenfalls Unterschiede verschiedener nationaler Standards dadurch leicht berücksichtigt werden können.

Gemäß der Erfindung ist die Ausgabeeinheit eingerichtet Bilddaten mittels zumindest einem Datensignal zu übertragen, wobei das zumindest eine Datensignal ein Zeitfenster umfasst, in dem Bildinformationen der Bilddaten übertragen werden und das Zeitfenster von einer hinteren Signal-Schulter der Bildinformationen und einer vorderen Signal-Schulter der darauf folgenden Bildinformationen begrenzt ist, und die Berechnung der Situationslichtverteilung im diesem Zeitfenster durchgeführt wird.

Die Berechnung der Situationslichtverteilung findet in einem Zeitintervall statt, in dem die Belegung der Steuereinheit durch die Berechnung der Bildinformationen optimal positioniert ist und die Steuereinheit außerhalb dieses Zeitfensters für andere Berechnungen oder Steuerungen des Fahrzeugscheinwerfers genutzt werden kann.

Es ist ausgesprochen vorteilhaft, wenn die zumindest eine Lichtquelle eine Halbleiter-Leuchtdiode, insbesondere eine Hochstrom-Leuchtdiode oder eine Laser-Diode umfasst, da eine geringe Baugröße im Fahrzeugscheinwerfer erzielt werden kann. Außerdem wird das Licht mit hohem Wirkungsgrad erzeugt und die Abwärme der Lichtquelle reduziert, was speziell bei der Verwendung von temperatursensitiven AMDs oder DMDs sehr wichtig ist.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in:
- Fig. 1: eine perspektivische Darstellung einer ersten Ausführungsform eines Fahrzeugscheinwerfers nach der Erfindung,
- Fig. 2: eine perspektivische Darstellung einer zweiten Ausführungsform eines Fahrzeugscheinwerfers nach der Erfindung,
- Fig. 3: eine Ansicht von vorne auf ein optoelektronisches Bauteil mit einer vergrößerten Detaildarstellung enthaltener optoelektronischer Elemente,
- Fig. 4: ein Blockschaltbild eines erfindungsgemäßen Fahrzeugscheinwerfers,
- Fig. 5: einen zeitlichen Verlauf von Signalen zur Steuerung des optoelektronischen Bauteils nach Fig. 4,
- Fig. 6: eine perspektivische Darstellung einer berechneten Lichtverteilung eines erfindungsgemäßen Fahrzeugscheinwerfers,
- Fig. 7: eine Darstellung einer Lichtverteilung eines erfindungsgemäßen Fahrzeugscheinwerfers.

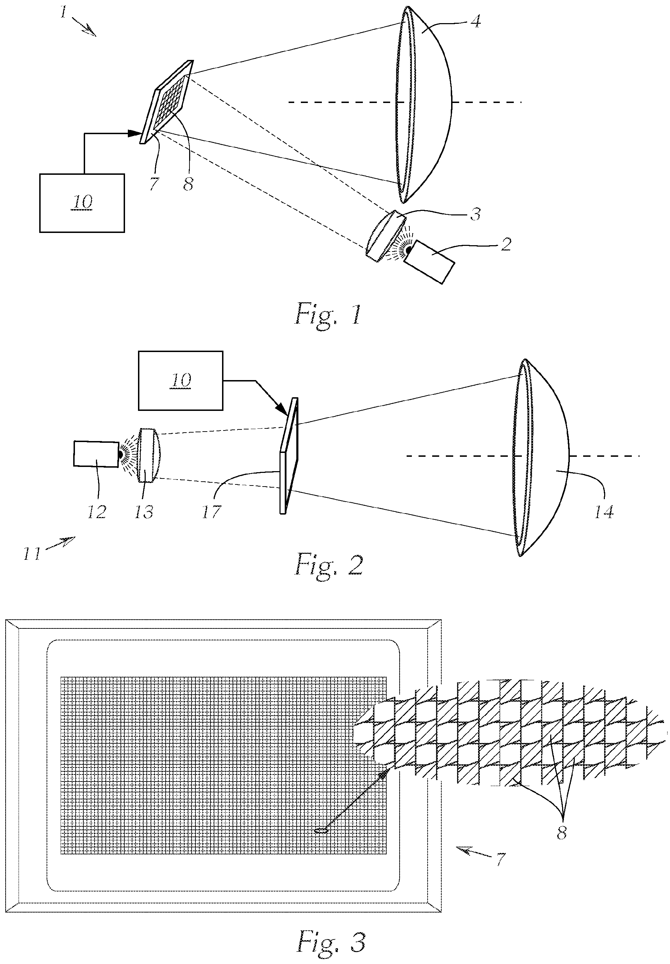

Unter Bezugnahme auf Fig. 1 bis Fig. 7 werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstelleinrichtungen beziehungsweise Halterungen nicht gezeigt.

Die Ausführungsbeispiele illustrieren zugleich das erfindungsgemäße Verfahren zur Erzeugung einer Lichtverteilung vor einem Fahrzeug durch einem Fahrzeugscheinwerfer der hier beschriebenen Art.

Es ist klar, dass die Ausführungsbeispiele und deren Merkmale sowohl einzeln die Erfindung abbilden, als auch untereinander kombinierbar sind.

**Fig. 1** zeigt eine erste Ausführungsform eines Fahrzugscheinwerfers 1 nach der Erfindung. Eine Lichtquelle 2, die beispielsweise eine Leuchtdiode oder Power-LED sowie eine Primäroptik 3 zur Bündelung eines Lichtstrahls enthalten kann, ist dazu eingerichtet, ein optoelektronisches Bauteil 7 zu beleuchten.

Das optoelektronische Bauteil 7 kann mehrere, in einer zweidimensionalen Matrix angeordnete optoelektronische Elemente 8 umfassen. In diesem ersten Ausführungsbeispiel sind die optoelektronischen Elemente 8 einzeln ansteuerbare Mikrospiegel, bei denen die Reflexionswirkung jedes einzelnen Elements der Matrix variabel einstellbar ist (beispielsweise ein AMD oder DMD).

Das optoelektronische Bauteil 7 kann das einfallende Licht in Richtung einer Projektionsoptik 4 reflektieren, wobei die gesteuerten Matrixelemente individuell deren Reflexionsfaktor durch Modulation der Winkel der Mikrospiegel einstellen und eine gewünschte Lichtverteilung auf den einfallenden Lichtstrahl modulieren. Die Projektionsoptik 4 ist in die Abstrahlrichtung des Fahrzeugscheinwerfers 1 orientiert und erzeugt folglich die gewünschte Lichtverteilung vor dem Fahrzeug.

Die Ansteuerung des optoelektronischen Bauteils 7 erfolgt durch die Ansteuerungseinheit 10, in der eine gewünschte Lichtverteilung berechnet werden kann und in die dazu erforderliche Ansteuerung der optoelektronischen Elemente 8 in Form von Steuersignalen an das optoelektronische Bauteil 7 ausgegeben werden.

**Fig. 2** zeigt eine zweite Ausführungsform eines Fahrzugscheinwerfers 11 nach der Erfindung. Eine Lichtquelle 12, die beispielsweise eine Leuchtdiode, Hochstrom-LED (Power-LED) oder eine Laser-Diode sowie eine Primäroptik 13 zur Bündelung des von der Lichtquelle 12 ausgehenden Lichtstrahls enthalten kann, ist dazu eingerichtet, ein optoelektronisches Bauteil 17 zu beleuchten.

Das optoelektronische Bauteil 17 umfasst mehrere, in einer zweidimensionalen Matrix angeordnete optoelektronische Elemente. In diesem zweiten Ausführungsbeispiel sind die optoelektronischen Elemente 8 einzeln ansteuerbare lichtdurchlässige Elemente, bei denen die Lichtdurchlasswirkung jedes einzelnen Elements der Matrix variabel einstellbar ist (beispielsweise ein LCD).

Das optoelektronische Bauteil 17 kann das einfallende Licht in Richtung einer Projektionsoptik 14 durchlassen, wobei die gesteuerten Matrixelemente individuell deren Lichtdurchlässigkeit einstellen und eine gewünschte Lichtverteilung auf den einfallenden Lichtstrahl modulieren. Die Projektionsoptik 14 ist in die Abstrahlrichtung des Fahrzeugscheinwerfers 11 orientiert und erzeugt folglich die gewünschte Lichtverteilung vor dem Fahrzeug.

Die Ansteuerung des optoelektronischen Bauteils 17 erfolgt durch die Ansteuerungseinheit 10a, in der eine Lichtverteilung berechnet werden kann und die dazu erforderliche Ansteuerung der optoelektronischen Elemente, beispielsweise die Pixel eines LCD, in Form von Steuersignalen an das optoelektronische Bauteil 17 ausgegeben werden

Neben den in Fig. 1 und Fig. 2 gezeigt gezeigten Varianten des optoelektronische Bauteils 7, 17 können natürlich auch andere Technologien eingesetzt werden, die eine entsprechende Modulation des Lichtes ermöglichen. Der Vollständigkeit halber sollen daher auch LCoS Systeme (LCoS, "Liquid Crystal on Silicon") genannt werden.

Die Modulation des Lichts ermöglicht eine Segmentierung der Lichtverteilung auf der Fahrbahn, das heißt die auf die Fahrbahn projizierte Lichtverteilung kann für verschiedene Raumwinkel individuell gesteuert werden. Für ein auf eine Fahrbahn projiziertes Lichtbild ist die Anzahl von Segmenten wichtig, die individuell durch einen erfindungsgemäßen Fahrzeugscheinwerfer angesteuert werden können, um für verschiedene Fahrsituationen individuell angepasste Lichtverteilungen zu erzeugen. Die Anzahl dieser Segmente ist beispielsweise von der Anzahl der Mikrospiegel abhängig und beträgt beispielsweise 854 x 480 Mikrospiegel oder Pixel in rechteckiger Matrix-Anordnung.

Werden für Fahrzeuge zwei Scheinwerfer verwendet, können die Segmente aneinandergereiht und die Anzahl der Segmente verdoppelt werden. Üblicherweise werden in Einbaulage des Fahrzeugscheinwerfers mehr Segmente in horizontaler als in vertikaler Richtung benötigt. Aus diesem Grund werden in der Praxis häufig die durch die optoelektronischen Bauteile segmentierten Lichtverteilungen von zwei Fahrzeugscheinwerfer an den kurzen Seiten der Matrixanordnung aneinandergereiht und damit die horizontale Auflösung verdoppelt.

Es ist auch eine vollständige oder auch nur teilweise Überlagerung beziehungsweise Überlappung zweier oder mehrerer Lichtverteilungen möglich, um beispielsweise einen stärkeren Kontrast in Bildbereichen zu erzielen.

In **Fig. 3** ist ein Beispiel eines optoelektronischen Bauteils 7 in Form eines DMD in Vorderansicht gezeigt. Ein vergrößerter Bildausschnitt zeigt matrixförmig angeordnete optoelektronische Elemente 8, die einzeln steuerbare Mikrospiegel umfassen, wobei in diesem Beispiel jeder zweite Mikrospiegel verkippt ist.

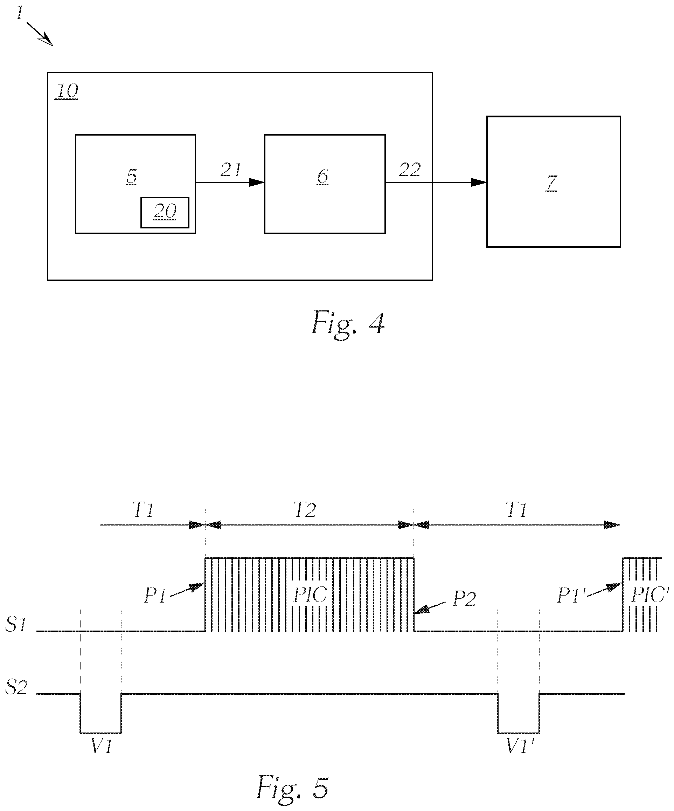

**Fig. 4** zeigt ein elektrisches Blockschaltbild des erfindungsgemäßen Fahrzeugscheinwerfers 1. Eine Steuereinrichtung 5 kann aus einem Lichtmodell 20 eine Lichtverteilung in Form von Bilddaten 21 berechnen und über eine Ausgabeeinheit 6 in Form von Videosignalen 22 an das optoelektronische Bauteil 7 ausgeben. Die Steuereinrichtung 5 bildet gemeinsam mit der Ausgabeeinheit 6 die Ansteuerungseinheit 10, an die das optoelektronische Bauteil 7 angeschlossen ist. Der von der Steuereinrichtung 5 benötigte Speicher kann sowohl auf einem Mikroprozessor-Chip als auch auf einem gesonderten Chip oder Speicher-Chip gelegen sein. Zusätzlich kann die Steuereinrichtung 5 eine Schnittstelle umfassen, über die beispielsweise Lichtmodelle 20 an die Steuereinrichtung 5 übermittelt werden können.

In **Fig. 5** sind Signalverläufe im Zeitbereich für ein Datensignal S1 sowie ein V-Sync Steuersignal S2 mit Synchronisationsimpulsen V1, V1' eines Videosignals dargestellt. Die Steuereinrichtung 5 führt wiederholt Neuberechnungen der gewünschten Lichtverteilung durch, um der jeweiligen Fahrsituation des Fahrzeugs gerecht zu werden und die jeweils benötigte Lichtverteilung zu berechnen. Die Steuereinrichtung 5 überträgt die berechnete Lichtverteilung in Form von Bilddaten 21 an die Ausgabeeinheit 6, die wiederum die Bilddaten in Form von Videosignalen 22, umfassend ein Datensignal S1 und ein V-Sync Signal S2 an das optoelektronische Bauteil 7 überträgt. Häufig weisen Videosignale 22 eine Signalfrequenz auf, um beispielsweise eine Bildwiederholfrequenz von beispielsweise 25 Bildern pro Sekunde zu erreichen. Zur Veranschaulichung sind in Fig. 5 zwei aufeinander folgende Zeitfenster T1 und T2 gezeigt. Das Zeitfenster T1 beginnt mit einem Ende einer Übertragung von Bildinformation und dauert bis zum Beginn der Übertragung von darauf folgenden Bildinformationen der Bilddaten 21 im Datensignal S1. Das Zeitfenster T2 beginnt nach dem Ende des Zeitfensters T1 und dauert bis zum Ende der Übertragung von Bildinformationen aus den Bilddaten 21 im Datensignal S1.

Mit anderen Worten ist die Ausgabeeinheit 6 eingerichtet Bildsignale mittels zumindest einem Datensignal S1 zu dem optoelektronischen Bauteil 7, 17 zu übertragen und das zumindest eine Datensignal S1 schließt ein Zeitfenster T2 ein, das zwischen einer vorderen Signal-Schulter P1 und einer hinteren Signal-Schulter P2 der Bildinformationen PIC im Datensignal S1 gelegen ist. Das Zeitfenster T1 ist zwischen einer hinteren Signal-Schulter P2 der Bildinformationen PIC und einer vorderen Signal-Schulter P1' der darauf folgenden Bildinformationen PIC' im Datensignal S1 gelegen. Jede Fahrsituation kann eine Neuberechnung der Lichtverteilung erfordern, beispielsweise wenn ein Fahrer eines Fahrzeugs von einer Abblendlicht-Funktion zu einer Fernlicht-Funktion des Fahrzeugscheinwerfers wechselt. Dieser Wechsel muss sehr rasch erfolgen, wobei die für diesen Vorgang erforderliche Rechenkapazität der Steuereinrichtung 5 berücksichtigt werden sollte. Dabei ist es besonders günstig, wenn die Berechnung der Situationslichtverteilung im Zeitfenster T1 durchgeführt wird, da zu dieser Zeit keine Bilddaten übertragen werden und Rechenkapazität seitens der Steuereinrichtung 5 verfügbar sein kann. Das Zeitfenster T1 liegt zwischen jeder hinteren Signal-Schulter P2 ("back porch") und vorderen Signal-Schulter P1' ("front porch"). Abhängig von einer gewünschten Bildwiderholrate bleiben für die Berechnung der Lichtverteilung nur wenige Millisekunden im Zeitfenster T1. Beispielsweise beträgt das Zeitfenster T1 bei einem Videosignal, das Bildinformationen von 640x480 Pixel umfasst und eine Bildwiederholrate von 60Hz aufweist, in etwa 1.4 ms zwischen der hinteren Signal-Schulter P2 der Bildinformationen PIC und der vorderen Signal-Schulter P1' der darauf folgenden Bildinformationen PIC'.

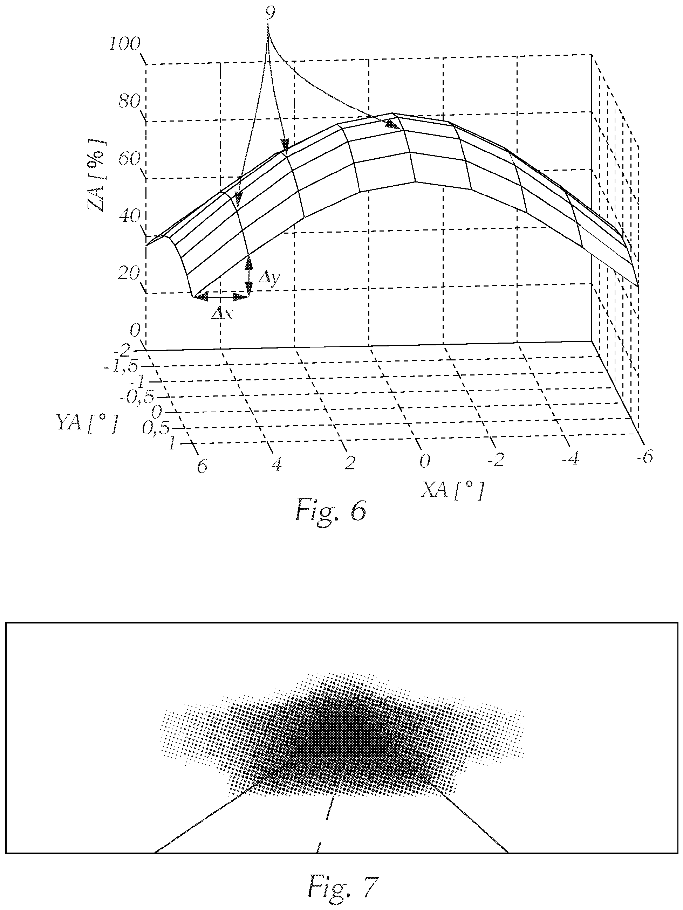

**Fig. 6** zeigt eine räumliche Darstellung eines Beispiels für eine berechnete Lichtverteilung, beispielsweise die eines Fernlichtes. Auf den Achsen des gezeigten Koordinatensystems sind auf den Achsen XA und YA die horizontale und vertikale Position des jeweiligen Helligkeitswerts (oder Dimmwerts), der auf der Achse ZA aufgetragen ist, gezeigt.

Andere Lichtverteilungen sind genauso möglich, wie die Lichtverteilung eines Abblendlichts, eines Kurvenlichts, etc.

Die Lichtverteilung kann durch Stützstellen 9 beschrieben werden. Jede Stützstelle 9 umfasst beispielsweise einen Datensatz (X, Y, Z), wobei Z der gewünschte Helligkeitswert in der Position (X, Y) ist. Durch Interpolation zwischen den Stützstellen können weitere Helligkeitswerte berechnet werden. Es sind dabei unterschiedliche Interpolationsverfahren möglich. Bei Verwendung einer linearen Interpolation werden die Steigungen zwischen den Stützstellen 9 berechnet und bei der Berechnung von Punkten, die zwischen den einzelnen Stützstellen 9 liegen, werden die jeweiligen gleichen Steigungen eingesetzt, um die Berechnung selbst besonders einfach zu halten. Dies kann erforderlich sein, falls die Rechenkapazität der Steuereinrichtung 5 begrenzt ist. Das Zeitfenster T1 liegt zur Berechnung besonders günstig und kann vorteilhaft genutzt werden, indem im Zeitfenster T1 Berechnungen für Lichtverteilungen durchgeführt werden.

Die Werte der einzelnen Matrixelemente des optoelektronischen Bauteils 7, 17 können einer absoluten oder relativen Helligkeit in der berechneten Lichtverteilung entsprechen. Ferner können die Werte einem Einstellwert eines jeweiligen optoelektronischen Elements 8 entsprechen, beispielsweise Werte zwischen 0 und 255, dem Reflexionsfaktor oder Helligkeitswerte beziehungsweise Dimmwerte zwischen 0% für dunkel oder 100% für hell. Je nach Definition dieser Werte, die durch das DMD System vorgegeben ist, kann es notwendig sein, dass das optoelektronische Bauteil 7 eine Anpassung auf Einstellbereiche der optoelektronischen Elemente 8 vornimmt.

Bei manchen DMD Systemen erfolgt die Modulation des Lichts durch hochfrequente Verkippung der jeweiligen Mikrospiegel im Sinne einer Pulsweiten-Modulation (PWM), wobei der Arbeitszyklus ("duty cycle") angepasst wird, beispielsweise für eine Dimmung von 70% die Mikrospiegel im Takt 70/30 zwischen zwei stabilen Spiegelzuständen bewegt werden. Gebräuchlich sind Kippfrequenzen von bis zu 200Hz, 1kHz oder 10kHz. Alternativ können die Einstellwerte der einzelnen Matrixelemente des optoelektronischen Bauteils 7, 17 den Stellungen von Mikrospiegeln oder Kippfrequenzen der Mikrospiegel entsprechen.

**Fig. 7** zeigt beispielhaft ein durch die erfindungsgemäße Anordnung erzeugte hochaufgelöste Lichtverteilung eines Abblendlichts auf einer Straße, wobei dunkel gezeigte Bereiche für Bereiche hoher Helligkeit stehen. Die gezeigte Darstellung ist demnach invers zu einer Helligkeitsverteilung.

### Liste der Bezugszeichen:

- 1, 11: Fahrzeugscheinwerfer
- 2, 12: Lichtquelle
- 3, 13: Primäroptik
- 4, 14: Projektionsoptik
- 5: Steuereinrichtung
- 6: Ausgabeeinheit
- 7, 17: optoelektronisches Bauteil
- 8: optoelektronisches Element
- 9: Stützstelle
- 10, 10a: Ansteuerungseinheit
- 20: Lichtmodell
- 21: Bilddaten
- 22: Videosignal
- S1: Datensignal
- S2: V-Sync Signal
- T1: Zeitfenster 1
- T2: Zeitfenster 2
- P1, P1': Vordere Signal-Schulter ("front porch")
- P2: Hintere Signal-Schulter ("back porch")
- V1, V1': Video-Synchronisationsimpuls
- PIC, PIC': Bildinformation
- X, Y, Z: Koordinaten
- XA, YA, ZA: Achsen

## Patentansprüche

1. Fahrzeugscheinwerfer (1, 11), umfassend zumindest eine Lichtquelle (2,12), zumindest eine Projektionsoptik (4,14), zumindest eine Steuereinrichtung (5), zumindest eine Ausgabeeinheit (6), sowie zumindest ein optoelektronisches Bauteil (7,17), das eine steuerbare Anordnung von mehreren, individuell verstellbaren optoelektronischen Elementen (8) in Form einer zweidimensionalen Matrix umfasst, wobei eine Bildauflösung durch das Produkt aus der Anzahl von Zeilen und Spalten der Matrix definiert ist, und der Fahrzeugscheinwerfer (1, 11) dazu eingerichtet ist, Licht von der zumindest einen Lichtquelle (2, 12) in Richtung des zumindest einen optoelektronischen Bauteils (7, 17) abzustrahlen und mittels des zumindest einen optoelektronischen Bauteils (7, 17) zu modulieren und zumindest teilweise in Richtung der zumindest einen Projektionsoptik (4, 14) zu leuchten und vor dem Fahrzeug ein Lichtbild auszubilden, wobei die zumindest eine Steuereinrichtung (5) mit der zumindest einen Ausgabeeinheit (6) verbunden ist, die zumindest eine Ausgabeeinheit (6) mit dem zumindest einen optoelektronischen Bauteil (7, 17) zum Ansteuern der optoelektronischen Elemente (8) verbunden ist, wobei seitens der zumindest einen Steuereinrichtung (5) zumindest ein Lichtmodell (20) in Form einer Vielzahl von Stützstellen (9) gespeichert ist, **dadurch gekennzeichnet, dass** die zumindest eine Steuereinrichtung (5) dazu eingerichtet ist, aus dem zumindest einen Lichtmodell (20) Bilddaten (21) in Form einer zweidimensionalen, matrixförmigen Situationslichtverteilung mit einer Situationsbildauflösung, die durch das Produkt aus der Anzahl von Zeilen und Spalten der Situationslichtverteilung definiert ist, zu bilden, wobei die Situationsbildauflösung wesentlich höher, bevorzugt zumindest hundertmal, besonders bevorzugt zumindest zehntausendmal so hoch ist als die Vielzahl der Stützstellen (9) des Lichtmodells und die Bilddaten (21) durch Interpolation aus den Stützstellen (9) gebildet werden, und
mittels der zumindest einen Ausgabeeinheit (6) die Bilddaten (21) von der zumindest einen Steuereinrichtung (5) zu dem zumindest einen optoelektronischen Bauteil (7, 17) übertragen werden, wobei die Ausgabeeinheit (6) eingerichtet ist die Bilddaten (21) mittels zumindest einem Datensignal (S1) zu dem optoelektronischen Bauteil (7,17) zu übertragen, in dem Bildinformationen der Bilddaten (21) übertragen werden und das zumindest eine Datensignal (S1) ein Zeitfenster (T1) einschließt, das zwischen einer hinteren Signal-Schulter (P2) der Bildinformationen (PIC) und einer vorderen Signal-Schulter (P1') der darauf folgenden Bildinformationen (PIC') im Datensignal (S1) gelegen ist, wobei die Berechnung der Situationslichtverteilung im Zeitfenster (T1) durchgeführt wird.

2. Fahrzeugscheinwerfer (1, 11) nach Anspruch 1, **dadurch gekennzeichnet, dass** die Interpolation von Werten zwischen jeweils benachbarten Stützstellen (9) linear erfolgt.

3. Fahrzeugscheinwerfer (1, 11) nach Anspruch 1 oder 2, **dadurch gekennzeichnet, dass** die Stützstellen (9) durch Reflexionswerte oder Transmissionswerte der optoelektronischen Elemente (8) definiert sind.

4. Fahrzeugscheinwerfer (1, 11) nach einem der Ansprüche 1 bis 3, **dadurch gekennzeichnet, dass** die Abstände zwischen jeweils benachbarten Stützstellen (9) gleich groß sind.

5. Fahrzeugscheinwerfer (1, 11) nach einem der Ansprüche 1 bis 4, **dadurch gekennzeichnet, dass** die Situationslichtverteilung eine Lichtverteilung eines Abblendlichts oder eines Fernlichts eines Fahrzeugs ist.

6. Fahrzeugscheinwerfer (1, 11) nach einem der Ansprüche 1 bis 5, **dadurch gekennzeichnet, dass** die zumindest eine Lichtquelle (2) eine Halbleiter-Leuchtdiode, insbesondere eine Hochstrom-Leuchtdiode oder eine Laser-Diode umfasst.

7. Verfahren zur Erzeugung zumindest einer Lichtverteilung mit einem Fahrzeugscheinwerfer (1, 11), umfassend zumindest eine Lichtquelle (2,12), zumindest eine Projektionsoptik (4, 14), zumindest eine Steuereinrichtung (5), zumindest eine Ausgabeeinheit (6), sowie zumindest ein optoelektronisches Bauteil (7,17), das eine steuerbare Anordnung von mehreren, individuell verstellbaren optoelektronischen Elementen (8) in Form einer zweidimensionalen Matrix umfasst, wobei eine Bildauflösung durch das Produkt aus der Anzahl von Zeilen und Spalten der Matrix definiert ist, und der Fahrzeugscheinwerfer (1, 11) dazu eingerichtet ist, Licht von der zumindest einen Lichtquelle (2, 12) in Richtung des zumindest einen optoelektronischen Bauteils (7, 17) abzustrahlen und mittels des zumindest einen optoelektronischen Bauteils (7, 17) zu modulieren und zumindest teilweise in Richtung der zumindest einen Projektionsoptik (4, 14) zu leuchten und vor dem Fahrzeug ein Lichtbild auszubilden, wobei die zumindest eine Steuereinrichtung (5) mit der zumindest einen Ausgabeeinheit (6) verbunden ist, die zumindest eine Ausgabeeinheit (6) mit dem zumindest einen optoelektronischen Bauteil (7, 17) verbunden ist und die optoelektronische Elemente (8) ansteuert, wobei seitens der zumindest einen Steuereinrichtung (5) zumindest ein Lichtmodell (20) gespeichert ist, **dadurch gekennzeichnet, dass** die zumindest eine Steuereinrichtung (5) aus zumindest einem Lichtmodell (20), welches in Form einer Vielzahl von Stützstellen (9) in einer der Steuereinrichtung (5) zugeordnetem Speicher seitens der Steuereinrichtung abgespeichert ist, Bilddaten (21) in Form einer zweidimensionalen, matrixförmigen Situationslichtverteilung mit einer Situationsbildauflösung, die durch das Produkt aus der Anzahl von Zeilen und Spalten der Situationslichtverteilung definiert ist, zu bilden, wobei die Situationsbildauflösung wesentlich höher, bevorzugt zumindest hundertmal, besonders bevorzugt zumindest zehntausendmal so hoch ist als die Vielzahl der Stützstellen (9) des Lichtmodells und die Bilddaten (21) durch Interpolation aus den Stützstellen (9) gebildet werden, und die Bilddaten (21) mittels der zumindest einen Ausgabeeinheit (6) auf das zumindest eine optoelektronische Bauteil (7,17) abgebildet werden, wobei die Ausgabeeinheit (6) die Bilddaten (21) mittels zumindest einem Datensignal (S1) zu dem optoelektronischen Bauteil (7,17), in dem Bildinformationen der Bilddaten (21) übertragen werden und das zumindest eine Datensignal (S1) ein Zeitfenster (T1) einschließt, das zwischen einer hinteren Signal-Schulter (P2) der Bildinformationen (PIC) und einer vorderen Signal-Schulter (P1') der Bildinformationen (PIC') im Datensignal (S1) gelegen ist, wobei die Berechnung der Situationslichtverteilung im Zeitfenster (T1) durchgeführt wird.

8. Verfahren nach Anspruch 7, **dadurch gekennzeichnet, dass** die Interpolation von Werten zwischen jeweils benachbarten Stützstellen (9) linear erfolgt.

9. Verfahren nach Anspruch 7 oder 8, **dadurch gekennzeichnet, dass** die Stützstellen (9) durch Reflexionswerte oder Transmissionswerte der optoelektronischen Elemente (8) definiert sind.

10. Verfahren nach einem der Ansprüche 7 bis 9, **dadurch gekennzeichnet, dass** die Abstände zwischen jeweils benachbarten Stützstellen (9) gleich groß sind.

11. Verfahren nach einem der Ansprüche 7 bis 10, **dadurch gekennzeichnet, dass** die Situationslichtverteilung eine Lichtverteilung eines Abblendlichts oder eines Fernlichts eines Fahrzeugs ist.

## Claims

1. Vehicle headlamp (1, 11), comprising at least one light source (2, 12), at least one projection optic (4, 14), at least one control device (5), at least one output unit (6), and at least one optoelectronic component (7, 17) which comprises a controllable arrangement of a plurality of individually adjustable optoelectronic elements (8) in the form of a two-dimensional matrix, an image resolution being defined by the product of the number of rows and columns of the matrix, and the vehicle headlamp (1, 11) is arranged to emit light from the at least one light source (2, 12) in the direction of the at least one optoelectronic component (7, 17) and to modulate by means of the at least one optoelectronic component (7, 17) and to illuminate at least partially in the direction of the at least one projection optic (4, 14) and to form a light image in front of the vehicle, wherein the at least one control device (5) is connected to the at least one output unit (6), the at least one output unit (6) is connected to the at least one optoelectronic component (7, 17) for driving the optoelectronic elements (8), wherein, on the part of the at least one control device (5), at least one light model (20) is stored in the form of a multiplicity of support points (9)
**characterized in that**
the at least one control device (5) is set up to form image data (21) from the at least one light model (20) in the form of a two-dimensional, matrix-shaped situation light distribution with a situation image resolution which is defined by the product of the number of rows and columns of the situation light distribution, the situation image resolution being substantially higher, preferably at least a hundred times, particularly preferably at least ten thousand times as high as the plurality of supporting points (9) of the light model and the image data (21) being formed by interpolation from the supporting points (9), and by means of the at least one output unit (6), the image data (21) are transmitted from the at least one control device (5) to the at least one optoelectronic component (7,17), wherein the output unit (6) is set up to transmit the image data (21) to the optoelectronic component (7, 17) by means of at least one data signal (S1), in which image information of the image data (21) is transmitted and the at least one data signal (S1) includes a time window (T1) which is located between a rear signal shoulder (P2) of the image information (PIC) and a front signal shoulder (P1') of the subsequent image information (PIC') in the data signal (S1), the calculation of the situation light distribution being carried out in the time window (T1).

2. Vehicle headlamp (1, 11) according to claim 1, **characterized in that** the interpolation of values between respectively adjacent interpolation points (9) is performed linearly.

3. Vehicle headlamp (1, 11) according to claim 1 or 2, **characterized in that** the supporting points (9) are defined by reflection values or transmission values of the optoelectronic elements (8).

4. Vehicle headlamp (1,11) according to one of claims 1 to 3, **characterized in that** the distances between respectively adjacent support points (9) are equal.

5. Vehicle headlamp (1, 11) according to one of claims 1 to 4, **characterized in that** the situation light distribution is a light distribution of a low beam or a high beam of a vehicle.

6. Vehicle headlamp (1, 11) according to one of claims 1 to 5, **characterized in that** the at least one light source (2) comprises a semiconductor light-emitting diode, in particular a high-current light-emitting diode or a laser diode.

7. Method for generating at least one light distribution with a vehicle headlamp (1, 11), comprising at least one light source (2,12), at least one projection optical system (4,14), at least one control device (5), at least one output unit (6), and at least one optoelectronic component (7, 17) which comprises a controllable arrangement of a plurality of individually adjustable optoelectronic elements (8) in the form of a two-dimensional matrix, an image resolution being defined by the product of the number of rows and columns of the matrix, and the vehicle headlamp (1, 11) is arranged to emit light from the at least one light source (2, 12) in the direction of the at least one optoelectronic component (7,17) and to modulate by means of the at least one optoelectronic component (7,17) and to illuminate at least partially in the direction of the at least one projection optic (4, 14) and to form a light image in front of the vehicle, wherein the at least one control device (5) being connected to the at least one output unit (6), the at least one output unit (6) being connected to the at least one optoelectronic component (7, 17) and driving the optoelectronic elements (8), at least one light model (20) being stored on the part of the at least one control device (5)
**characterized in that**
the at least one control device (5) stores image data (21) in the form of a two-dimensional, matrix-shaped situation light distribution with a situation image resolution from at least one light model (20), which is stored in the form of a plurality of supporting points (9) in a memory assigned to the control device (5) on the part of the control device, which is defined by the product of the number of rows and columns of the situation light distribution, the situation image resolution being substantially higher, preferably at least a hundred times, particularly preferably at least ten thousand times as high as the multiplicity of the supporting points (9) of the light model and the image data (21) being formed by interpolation from the supporting points (9), and the image data (21) are imaged onto the at least one optoelectronic component (7, 17) by means of the at least one output unit (6), the output unit (6) transmitting the image data (21) by means of at least one data signal (S1) to the optoelectronic component (7, 17) in which image information of the image data (21) is transmitted, and the at least one data signal (S1) includes a time window (T1) which is located between a rear signal shoulder (P2) of the image information (PIC) and a front signal shoulder (P1') of the image information (PIC') in the data signal (S1), the calculation of the situation light distribution being carried out in the time window (T1).

8. Method according to claim 7, **characterized in that** the interpolation of values between respectively adjacent interpolation points (9) is performed linearly.

9. Method according to claim 7 or 8, **characterized in that** the supporting points (9) are defined by reflection values or transmission values of the optoelectronic elements (8).

10. Method according to one of claims 7 to 9, **characterized in that** the distances between respectively adjacent support points (9) are equal.

11. Method according to one of claims 7 to 10, **characterized in that** the situation light distribution is a light distribution of a low beam or a high beam of a vehicle.

## Revendications

1. Projecteur de véhicule (1, 11) comprenant au moins une source lumineuse (2, 12), au moins une optique de projection (4, 14), au moins un dispositif de commande (5), au moins une unité de sortie (6) et au moins un composant optoélectronique (7, 17) qui comprend un agencement commandable d'une pluralité d'éléments optoélectroniques (8) réglables individuellement sous la forme d'une matrice bidimensionnelle, une résolution d'image étant définie par le produit du nombre de lignes et de colonnes de la matrice, et le projecteur de véhicule (1, 11) est agencé pour émettre de la lumière à partir de la au moins une source lumineuse (2, 12) en direction du au moins un composant optoélectronique (7, 17) et pour moduler au moyen du au moins un composant optoélectronique (7, 17) et pour briller au moins partiellement en direction de la au moins une optique de projection (4,14) et pour former une image lumineuse à l'avant du véhicule, dans lequel le dispositif de commande (5) au nombre d'au moins un est relié à l'unité de sortie (6) au nombre d'au moins une, l'unité de sortie (6) au nombre d'au moins une est reliée au composant optoélectronique (7, 17) au nombre d'au moins un pour commander les éléments optoélectroniques (8), au moins un modèle de lumière (20) étant mémorisé sur le dispositif de commande (5) au nombre d'au moins un sous la forme d'une multiplicité de points d'appui (9)
**caractérisé en ce que**
l'au moins un dispositif de commande (5) est configuré pour former des données d'image (21) à partir de l'au moins un modèle de lumière (20) sous la forme d'une distribution de lumière de situation bidimensionnelle, en forme de matrice, avec une résolution d'image de situation qui est définie par le produit du nombre de lignes et de colonnes de la distribution de lumière de situation, la résolution de l'image de situation étant sensiblement plus élevée, de préférence au moins cent fois, de manière particulièrement préférée au moins dix mille fois plus élevée que la pluralité de points de support (9) du modèle lumineux et les données d'image (21) étant formées par interpolation à partir des points de support (9), et les données d'image (21) sont transmises de l'au moins un dispositif de commande (5) à l'au moins un composant optoélectronique (7, 17) au moyen de l'au moins une unité de sortie (6), dans lequel l'unité de sortie (6) est configurée pour transmettre les données d'image (21) au composant optoélectronique (7, 17) au moyen d'au moins un signal de données (S1), dans lequel des informations d'image des données d'image (21) sont transmises et l'au moins un signal de données (S1) comprend une fenêtre de temps (T1) qui est situé entre un épaulement de signal arrière (P2) de l'information d'image (PIC) et un épaulement de signal avant (P1') de l'information d'image suivante (PIC') dans le signal de données (S1), le calcul de la distribution de lumière de situation étant effectué dans la fenêtre temporelle (T1).

2. Projecteur de véhicule (1, 11) selon la revendication 1, **caractérisé en ce que** l'interpolation des valeurs entre des points d'interpolation (9) respectivement adjacents est effectuée de manière linéaire.

3. Projecteur de véhicule (1, 11) selon la revendication 1 ou 2, **caractérisé en ce que** les points d'appui (9) sont définis par des valeurs de réflexion ou des valeurs de transmission des éléments optoélectroniques (8).

4. Projecteur de véhicule (1, 11) selon l'une des revendications 1 à 3, **caractérisé en ce que** les distances entre les points d'appui (9) respectivement adjacents sont égales.

5. Projecteur de véhicule (1, 11) selon l'une des revendications 1 à 4, **caractérisé en ce que** la répartition lumineuse en situation est une répartition lumineuse d'un feu de croisement ou d'un feu de route d'un véhicule.

6. Projecteur de véhicule (1,11) selon l'une des revendications 1 à 5, **caractérisé en ce que** la au moins une source lumineuse (2) comprend une diode électroluminescente à semi-conducteur, notamment une diode électroluminescente à courant fort ou une diode laser.

7. Procédé pour générer au moins une répartition lumineuse avec un projecteur de véhicule (1,11), comprenant au moins une source lumineuse (2, 12), au moins une optique de projection (4, 14), au moins un dispositif de commande (5), au moins une unité de sortie (6) et au moins un composant optoélectronique (7, 17) qui comprend un agencement commandable d'une pluralité d'éléments optoélectroniques (8) réglables individuellement sous la forme d'une matrice bidimensionnelle, une résolution d'image étant définie par le produit du nombre de lignes et de colonnes de la matrice et le projecteur de véhicule (1, 11) est agencé pour émettre de la lumière à partir de la au moins une source lumineuse (2,12) en direction du au moins un composant optoélectronique (7, 17) et pour moduler au moyen du au moins un composant optoélectronique (7,17) et pour briller au moins partiellement en direction de la au moins une optique de projection (4, 14) et pour former une image lumineuse à l'avant du véhicule, dans lequel l'au moins un dispositif de commande (5) est relié à l'au moins une unité de sortie (6), l'au moins une unité de sortie (6) est reliée à l'au moins un composant optoélectronique (7,17) et commande les éléments optoélectroniques (8), au moins un modèle lumineux (20) étant mémorisé sur la partie de l'au moins un dispositif de commande (5),
**caractérisé en ce que**
le dispositif de commande (5), au nombre d'au moins un, mémorise des données d'image (21) sous la forme d'une répartition de la lumière de situation bidimensionnelle en forme de matrice avec une résolution d'image de situation à partir d'au moins un modèle de lumière (20), qui est mémorisé sous la forme d'une multiplicité de points d'appui (9) dans une mémoire associée au dispositif de commande (5) de la part du dispositif de commande, qui est définie par le produit du nombre de lignes et de colonnes de la distribution de la lumière de situation, la résolution de l'image de situation étant sensiblement plus élevée, de préférence au moins cent fois, de manière particulièrement préférée au moins dix mille fois, que la multiplicité des points de support (9) du modèle de lumière et les données d'image (21) étant formées par interpolation à partir des points de support (9), et les données d'image (21) sont reproduites sur le au moins un composant optoélectronique (7, 17) au moyen de la au moins une unité de sortie (6), l'unité de sortie (6) transmettant les données d'image (21) au moyen d'au moins un signal de données (S1) au composant optoélectronique (7, 17) dans lequel des informations d'image des données d'image (21) sont transmises, et le au moins un signal de données (S1) comprenant une fenêtre temporelle (T1) qui est situé entre un épaulement de signal arrière (P2) de l'information d'image (PIC) et un épaulement de signal avant (P1') de l'information d'image (PIC') dans le signal de données (S1), le calcul de la distribution de lumière de situation étant effectué dans la fenêtre temporelle (T1).

8. Procédé selon la revendication 7, **caractérisé en ce que** l'interpolation des valeurs entre des points d'interpolation (9) respectivement adjacents est effectuée de manière linéaire.

9. Procédé selon la revendication 7 ou 8, **caractérisé en ce que** les points d'interpolation (9) sont définis par des valeurs de réflexion ou des valeurs de transmission des éléments optoélectroniques (8).

10. Procédé selon l'une des revendications 7 à 9, **caractérisé en ce que** les distances entre les points d'appui (9) respectivement adjacents sont égales.

11. Procédé selon l'une des revendications 7 à 10, **caractérisé en ce que** la distribution lumineuse en situation est une distribution lumineuse d'un feu de croisement ou d'un feu de route d'un véhicule.
